# FASCICULE DE BREVET EUROPEEN

(11) **EP 0 789 849 B1**
(45) Date de publication et mention de la délivrance du brevet: **11.12.2002**
(21) Numéro de dépôt: 96928491.8
(22) Date de dépôt: 07.08.1996
(51) Int. Cl.: G01V 1/30

(54) **METHODE POUR REPRESENTER DANS UN DOMAINE SPATIO-TEMPOREL LA TRAJECTOIRE D'AU MOINS UN PUITS DE FORAGE**
VERFAHREN ZUR DARSTELLUNG DES VERLAUFS MINDESTENS EINES BOHRLOCHS IN EINEM RAUM-ZEITLICHEN BEREICH
METHOD FOR REPRESENTING THE PATH OF ONE OR MORE BOREHOLES IN A SPATIAL AND TEMPORAL DOMAIN

(30) Priorité: 14.08.1995 FR 9509797
(43) Date de publication de la demande: 20.08.1997
(73) Titulaire: ELF AQUITAINE PRODUCTION, 92400 Courbevoie (FR)
(72) Inventeur: ROBEIN, Etienne, F-64110 Jurançon (FR); KACULINI, Stefan, F-64000 Pau (FR)
(74) Mandataire: Levy, David
(86) Numéro de dépôt international: FR9601261
(87) Numéro de publication internationale: WO97007415

(56) Documents cités:
- FR-A- 2 304 929
- FR-A- 2 691 811
- US-A- 4 460 059
- US-A- 5 229 940
- GEOPHYSICS, vol. 58, no. 2, 1 Février 1993, pages 265-276, XP000345205 SENA A G ET AL: "KIRCHHOFF MIGRATION AND VELOCITY ANALYSIS FOR CONVERTED AND NONCONVERTED WAVES IN ANISOTROPIC MEDIA"

## Description

La présente invention concerne une méthode pour représenter dans un domaine spatio-temporel la trajectoire d'au moins un puits de forage et plus particulièrement pour caler dans un bloc de données sismiques migrées-temps la trajectoire d'un puits dévié.

Le calage d'un puits dans la sismique 2D ou 3D est nécessaire lorsqu'on souhaite projeter sur une représentation sismique à deux ou trois dimensions du milieu dans lequel le puits a été foré toutes les informations relatives à des données diverses qui sont enregistrées localement dans ou à proximité du trou de forage, généralement appelées logs. Il en est ainsi des informations relatives aux logs sonique, de densité, de résistivité, etc., à la profondeur des couches géologiques dudit milieu, aux limites biostratigraphiques, aux pendages des réflecteurs définis notamment par les interfaces entre deux couches consécutives, aux azimuts ou même aux images fournies par les différentes techniques de sismique de puits.

Le calage a donc lieu au moins
a) lorsque dans le traitement des données sismiques, le ou les puits sont utilisés comme référence dans une déconvolution à phase-zéro, une calibration AVO (Amplitude Versus Offset) ou lorsque les vitesses dans le puits sont utilisées en combinaison avec les vitesses de sommation pour construire des modèles de migration,
b) lorsque l'interprétateur commence une interprétation pour connaitre quel horizon sismique correspond à un marqueur ou réflecteur géologique donné,
c) lorsque les représentations profondeur produites dans une conversion temps-profondeur, doivent être calées au puits en termes de profondeur et de pendage.

Le calage peut être réalisé soit dans le domaine profondeur, soit dans le domaine de vitesses d'intervalle, soit encore dans le domaine temps.

Le calage dans le domaine profondeur signifie qu'on souhaite disposer d'un modèle profondeur ou d'une série de cartes (ou représentations) profondeur qui sont cohérentes avec la profondeur à la position du puits.

Le calage dans le domaine de vitesse d'intervalle est souhaité lorsqu'on désire avoir un modèle de vitesse qui comprend des vitesses d'intervalle cohérentes avec les vitesses d'intervalle estimées sur les puits par un log sonique calibré ou toute autre méthode. Ceci est généralement le cas pour les modèles utilisés pour la migration.

Lorsque le calage est réalisé dans le domaine temps, la trajectoire du puits, qui est définie en profondeur, doit être représentée dans ce domaine temps. Or, c'est réellement ce calage qui pose un véritable problème.

En effet, lorsqu'on désire comparer une série d'attributs ou de valeurs attachées à chaque point en profondeur de la trajectoire du puits et relatives par exemple au log sonique, densité, électriques, aux limites de couches, aux pendages, aux azimuts, etc., il serait idéal de représenter l'image sismique en profondeur, c'est-à-dire réaliser une migration profondeur en 3D, et de faire le calage dans ce domaine "naturel". Cependant, cela exige une connaissance précise du champ de vitesse du milieu. En pratique, on réalise une projection de la trajectoire du puits dans le domaine temps-migré (X, Y, T). Pour ce faire, on suppose que la migration a déplacé l'information à sa position correcte X, Y et que le temps migré est égal à un temps de trajet vertical. Il s'ensuit que le log dans le domaine temps est une version étirée verticalement du log en profondeur, la relation profondeur-temps étant dérivée en général de l'intégration du log sonique calibré par sismosondage (check-shot survey en Anglais) ou par les temps des premières arrivées d'un PSV (Profil Sismique Vertical) par exemple. Malheureusement, l'étirement vertical et le repositionnement par la migration temps en X, Y sont des approximations trop larges ou grossières quand un résultat précis est exigé (par exemple pour la délinéation d'un réservoir) ou dans les cas d'un milieu complexe ou tectonisé.

Comme on peut le voir, une première opération essentielle est l'élaboration d'un modèle de vitesses de propagation en profondeur.

Plusieurs techniques sont utilisées ou ont été proposées. Parmi celles qui sont le plus couramment utilisées, on peut citer celle relative à la conversion verticale temps-profondeur, celle utilisant la migration le long du rayon-image (correction dite de HUBRAL), celle utilisant la migration le long du rayon normal, celle utilisant la tomographie ou incluant l'inversion des vitesses de sommation et celle utilisant le procédé dit de "cohérence".

La conversion verticale temps-profondeur et la migration le long du rayon image sont effectuées à partir de réflecteurs migrés-temps et d'informations sur les vitesses de propagation des ondes sismiques extraites soit du puits lui-même (sismosondages, PSV, etc.) soit de données sismiques de surface (vitesses de sommation ayant subi l'inversion par application de la formule de DIX).

La migration le long du rayon normal utilise des réflecteurs dans le domaine de sommation, lesdits réflecteurs étant obtenus soit par un pointé dans le domaine sommation, soit par une démigration des réflecteurs migrés-temps. Cette migration utilise le même type d'informations sur les vitesses de propagation des ondes que celui rappelé ci-dessus.

Toutefois ces procédés pour réaliser une carte ou représentation profondeur présentent de nombreux inconvénients. En particulier, les vitesses de sommation sont dans le domaine sommation-temps alors que les horizons sont dans le domaine temps-migré. Or, les deux séries de données ne sont pas cohérentes. De plus, les vitesses de sommation comprennent des informations sur la vitesse d'intervalle autour du rayon normal plutôt qu'autour de la verticale. Un autre inconvénient réside dans le fait que les vitesses de sommation sont affectées par le pendage des horizons, les variations latérales des vitesses et par d'autres facteurs. Certes, on peut remédier à certains de ces inconvénients en appliquant un traitement DMO (DIP MOVE OUT en Anglais), qui est mis en oeuvre sur les collections en points milieux communs (CMP) avant l'analyse de vitesse de sommation.

Ainsi, les procédés tels que : inversion des temps de trajet, inversion de vitesses de sommation, inversion par cohérence ou d'autres techniques plus élaborées faisant appel à la migration profondeur avant sommation, peuvent être utilisées pour l'élaboration des modèles vitesse-profondeur.

Des procédés ont été conçus pour réduire les approximations constatées. Cependant, dans leur version classique, le modèle dérivé de la vitesse de sommation est un modèle isotrope, et il ne comprend toujours pas de moyens pour effectuer un calage du puits, en temps migré. Le produit final obtenu avec ces procédés est une série de cartes profondeur et des intervalles de vitesse ou fonctions de vitesse [Vo(x,y) + KZ] qui sont obtenues seulement à partir de la sismique.

Lorsque ces cartes sont obtenues à partir seulement de données sismiques de surface, on doit s'assurer qu'il y a cohérence entre la profondeur mesurée sur les puits et les cartes profondeur. Cela est classiquement fait en calibrant des cartes de vitesse d'intervalle par l'utilisation des vitesses d'intervalle résultant par exemple des relations temps-profondeur mesurées à l'emplacement du puits. Un autre procédé est de caler directement les cartes en profondeur.

Un autre inconvénient de ces procédés réside dans le fait que l'anisotropie du sous-sol est prise en compte de manière très approchée dans la détermination des vitesses.

La présente invention a pour but de proposer une méthode pour caler la trajectoire d'un puits de forage dévié dans le domaine temps-migré en améliorant, en temps réel, le modèle de vitesse-profondeur, ce qui est l'objectif recherché.

La présente invention a pour objet une méthode pour représenter dans un domaine spatio-temporel la trajectoire d'au moins un puits dévié et plus particulièrement une méthode de calage de ladite trajectoire qui inclut un maximum d'hétérogénéités et l'anisotropie du milieu dans lequel le puits dévié est foré, telle que revendiquée dans la revendication 1.

Selon une autre caractéristique, la méthode comprend en outre l'étape d'effectuer une migration en temps de ladite image du domaine synthétique, de manière à obtenir une représentation de ladite image dans un domaine migré-temps.

Selon une autre caractéristique, le domaine somme synthétique contenant l'image est superposé à un bloc somme de données sismiques.

Selon une autre caractéristique, le domaine migré-temps contenant la représentation est superposé à un bloc de données sismiques migrées-temps.

Selon une autre caractéristique, le bloc de données sismiques migrées-temps est obtenu à partir du bloc somme synthétique en utilisant un modèle de vitesse migration donné et en ce que la migration de ladite image (a) est effectuée au moyen dudit modèle de vitesse.

Selon une autre caractéristique, le modèle de vitesse-profondeur est à couches délimitées par des réflecteurs.

Selon une autre caractéristique, le modèle de vitesse-profondeur est un modèle maillé.

Selon une autre caractéristique, on sélectionne plusieurs points dans le modèle vitesse-profondeur et plus particulièrement les points situés proches de l'intersection de la trajectoire avec les réflecteurs.

Selon une autre caractéristique, le bloc de données sismiques migrées-temps est obtenu par migration de KIRCHHOFF du bloc de somme enregistré et en ce que le domaine migré-temps résulte d'une sommation analytique de ladite migration de KIRCHHOFF.

Selon une autre caractéristique, le bloc de données sismiques migrées-temps est obtenu au moyen d'une migration par différences finies et en ce que chaque image dans le domaine somme synthétique est distribuée sur une surface dite surface de diffraction.

Selon une autre caractéristique, on réalise au cours de la mise en oeuvre de ladite méthode une comparaison entre le domaine somme synthétique et le bloc somme enregistré et on détermine l'écart à la tangence ou à la coïncidence susceptible d'apparaître entre chaque surface de diffraction et le réflecteur correspondant et, lorsqu'il y a un écart, on procède à des itérations successives sur le modèle vitesse-profondeur jusqu'à ce que ledit écart soit acceptable pour considérer que ledit modèle est correctement calé.

Selon une autre caractéristique, la représentation en temps-migré de la surface de diffraction est une surface migrée-temps.

Selon une autre caractéristique, on détermine, au cours de la mise en oeuvre de ladite méthode s'il y a un écart à la tangence ou à la coïncidence entre ladite surface migrée-temps et l'horizon migré-temps correspondant et, lorsqu'il y a un écart, on procède à des itérations successives sur le modèle vitesse-profondeur jusqu'à ce que ledit écart soit acceptable pour considérer que ledit modèle est correctement calé.

Selon une autre caractéristique, le point de tangence ou de coïncidence (α ou α'), lorsqu'il existe, permet de déterminer le pendage réel du réflecteur dans le modèle vitesse-profondeur.

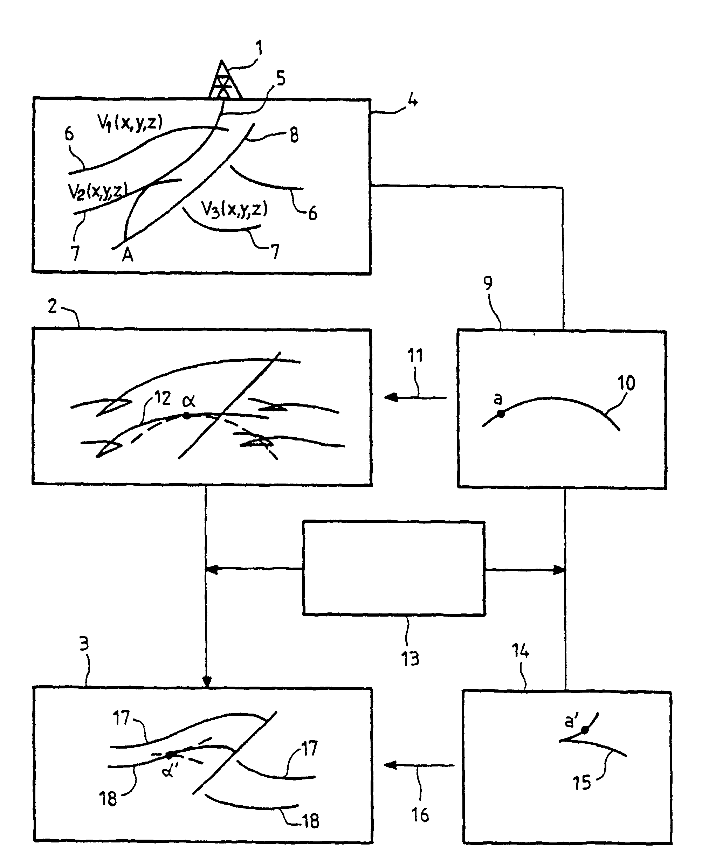

D'autres avantages et caractéristiques apparaîtront à la lecture de la description d'un mode de réalisation de la présente invention, ainsi que des dessins annexés sur lesquels la figure unique est une représentation schématique d'une mise en oeuvre préférée de la méthode selon l'invention.

Le forage d'un puits 1 permet d'accumuler un grand nombre d'informations sur la zone du sous-sol dans lequel est foré le puits. Des données sismiques sont également enregistrées indépendamment et dans la même zone, et sont utilisées notamment pour la construction d'un bloc somme 2 appelé dans ce qui suit "bloc somme enregistré".

Le bloc somme enregistré 2 est utilisé pour l'élaboration d'un bloc de données 'sismiques migrées-temps' 3, généralement à partir d'un modèle de vitesses concernant la zone considérée, appelé modèle ou champ de vitesses de migration-temps 13, représenté en fonction d'une échelle verticale appelée 'temps migré'. Ce modèle est une représentation très grossière du sous-sol, qui peut être représenté par son champ de vitesses de propagation des ondes sismiques V(x,y,z) incluant les hétérogénéités ainsi que l'anisotropie symbolisée par le champ ε(x,y,z), mal connus du géophysicien. Toute amélioration de la connaissance de cette information sur la réalité géologique du sous-sol est un gain important pour l'exploration. Ces techniques sont bien connues des spécialistes et ne seront pas décrites dans le détail.

Les informations recueillies dans le forage 1 doivent être confrontées, dans la pratique courante d'exploration, aux données sismiques enregistrées.

Cette confrontation se fait généralement dans le domaine des données sismiques migrées-temps.

Le plus souvent, on construit en partant des données sismiques migrées-temps et de toutes les informations relatives de près ou de loin aux vitesses de propagation (temps de trajet, vitesse de sommation, etc.) un modèle vitesse-profondeur 4, géologiquement représentatif de la zone considérée, de nombreuses techniques plus ou moins performantes mais toutes approximatives étant disponibles pour réaliser ce qui est communément appelé la conversion profondeur ou la migration profondeur selon la technique de mise en oeuvre.

En effet, les informations de puits (position mais surtout pendage) sont connues avec une précision limitée, les vitesses sont biaisées par le phénomène d'anisotropie et les procédés d'élaboration des modèles de vitesses sont insuffisamment précises.

La présente invention a pour objet principal une méthode pour caler la trajectoire du puits, représentée dans le modèle de vitesse-profondeur 4. dans le bloc sismique migré-temps, ce qui n'a pu être réalisé jusqu'à présent avec précision, en raison justement de toutes les hypothèses ou approximations qui sont faites dans les techniques disponibles.

Quelle que soit la technique utilisée pour l'élaboration du modèle de vitesse-profondeur 4, comme par exemple un étirement vertical d'un bloc migré-temps, il est nécessaire de caler ledit modèle de vitesse-profondeur 4 sur le puits 1 et de lui associer la trajectoire 5 du puits dans le modèle vitesse-profondeur 4. Ainsi chaque point A de la trajectoire 5 est défini au moins par des coordonnées spatiales X, Y, Z et un vecteur pendage (pendage et azimut)

Le vecteur pendage peut être obtenu directement à partir du modèle vitesse-profondeur 4 lorsque le point A est à l'intersection d'un réflecteur et de la trajectoire. Mais, ce vecteur pendage peut être obtenu par diverses voies telles que la pendagemétrie dans le puits, l'interpolation ou extrapolation entre deux réflecteurs profondeurs connus.

Le modèle vitesse-profondeur 4 est représenté sur la figure sous la forme d'un modèle à couches définies par leur champ de vitesse V₁, V₂, V₃ et qui sont délimitées entre elles par des réflecteurs dont trois 6 à 8 sont représentés. Mais il pourrait être représenté sous la forme maillée, représentation qui est bien connue encore des spécialistes, la forme maillée étant obtenue à partir d'une grille dans le sous-sol et dont les noeuds affectés d'une valeur de vitesse présentent un intérêt pour l'élaboration du réseau maillé dans le modèle vitesse-profondeur 4.

Dans le modèle vitesse-profondeur 4, la trajectoire 5 intersecte les réflecteurs 6 à 8 appelés réflecteurs profondeur. Chaque réflecteur profondeur 6 à 8 est défini entre autres par son pendage et son azimut.

Dans une mise en oeuvre préférée de l'invention, on s'intéresse plus particulièrement aux points d'intersection entre la trajectoire 5 et les réflecteurs profondeurs 6 à 8 et la méthode va être décrite pour l'un de ces points d'intersection, par exemple le point A, étant précisé que la méthode peut être appliquée à tous les autres points de la trajectoire et aux points situés autour de chacun de ces points d'intersection réels ou présumés, comme on le verra ultérieurement.

Pour chaque point A du modèle vitesse-profondeur 4, on procède à une modélisation par lancer du rayon à offset ou déport nul, à travers ledit modèle de vitesse-profondeur 4 ; le résultat de cette opération est un point image a, qui est défini par ses coordonnées spatio-temporelles et par un couple pendage-temps dans un domaine synthétique 9 équivalent au bloc somme enregistré 2.

Pour diverses valeurs de pendage et d'azimuts du point A, le lancer de rayons à offset nul permet de construire, dans le domaine synthétique 9, une surface de diffraction 10 sur laquelle sont situées toutes les images a du point A, pour les valeurs de pendage et d'azimut considérées.

Dans une autre étape, on superpose le domaine synthétique 9 au bloc somme enregistré 2, cette opération de superposition étant matérialisée par une flèche 11 sur la figure.

Le résultat de la superposition est une possible coïncidence ou tangence de la surface de diffraction 10, représentée en pointillé dans le bloc somme enregistré 2, avec le réflecteur 12. Le point de tangence ou de coïncidence entre la surface de diffraction 10 et le réflecteur 12 est appelé point spéculaire α. Comme il y a une relation biunivoque entre le point spéculaire α et le pendage correspondant au point A, ce pendage est une information nouvelle sur le pendage réel du réflecteur au point A.

Il est également possible de compléter la surface de diffraction 10 pour tenir compte par exemple de l'incertitude de mesure de la trajectoire spatiale du puits, en prenant plusieurs points ou un nuage de points situés autour et proches du point d'intersection sélectionné A et de procéder à des lancers de rayons à offset nul pour chacun de ces points afin de mieux préciser la position du point spéculaire α.

La même opération est répétée pour chacun des points d'intersection ou proches de l'intersection de la trajectoire 5 avec les réflecteurs profondeurs 6 à 8, ...etc. du modèle 4, chacun des points d'intersection A étant bien évidemment repéré par ses coordonnées Xₐ, Yₐ, Zₐ. Lorsque le point A n'appartient pas à un réflecteur profondeur, on prend des points situés de part et d'autre de la trajectoire 5 et autour du point A et par interpolation on détermine les paramètres affectés au point A, puis on lui applique l'opération pour déterminer son image a dans le domaine synthétique 9.

A cette étape, il est possible de procéder à une vérification visuelle et à une correction éventuelle du modèle vitesse-profondeur 4 et ce, de manière interactive ou en temps réel pendant la mise en oeuvre de la méthode.

En effet, il devient possible de procéder sur la station de travail à une comparaison entre le domaine somme synthétique 9 et le bloc somme enregistré 2 de manière à déterminer si un écart à la tangence ou à la coïncidence existe entre chaque surface de diffraction 10 et le réflecteur correspondant 12 du bloc somme enregistré. Lorsque cet écart existe, on procède à des itérations successives sur le modèle vitesse-profondeur 4, par changement des valeurs du vecteur pendage-azimut et/ou des valeurs de vitesses du modèle vitesse-profondeur et/ou des paramètres caractérisant l'anisotropie de la zone du puits, jusqu'à ce que ledit écart soit acceptable pour considérer que ledit modèle vitesse-profondeur 4 est correctement calé. Ainsi, il est possible d'affiner le modèle vitesse-profondeur 4 au cours de la mise en oeuvre de la méthode selon l'invention et de caler avec plus de précision la trajectoire 5 du puits dans ledit modèle.

Cela permet également de vérifier si l'intervalle de pendage qui a été utilisé est correct pour le point A sélectionné.

Dans une étape suivante, on procède à une migration temps pour chacun des points de chaque surface de diffraction 10 du domaine somme synthétique 9, par exemple par simulation, en tenant compte du couple pendage-temps correspondant à chacun de ces dits points, laquelle simulation est effectuée à travers le champ de vitesse de migration temps 13. Pour réaliser cette simulation au moins deux procédés peuvent être appliqués.

Un des procédés est celui mettant en oeuvre un lancer de rayons anisotropes dans le modèle de vitesses de migration temps (B. RAYNAUD 1993 : Real time migration operators simulated by anisotropic ray tracing. 55th EAEG-CO45), pas à pas, pour simuler l'opération de migration temps par différences finies ou tout autre procédé prenant en compte de manière équivalente le modèle de vitesses de migration temps.

Un autre procédé consiste à simuler la migration temps de KIRCHHOFF par une approche analytique. Ce procédé consiste à migrer un point de la surface de diffraction supposée être un hyperboloïde pour l'amener à l'apex dudit hyperboloïde.

Dans ces procédés de simulation de la cinématique de la migration-temps, on peut utiliser avantageusement une loi de vitesse qui tient compte des variations de vitesse incluses dans le modèle de vitesse de migration-temps de la zone considérée.

Le résultat de la simulation dans un domaine migration-temps 14 de chacune des surfaces de diffraction 10 n'est pas un point unique mais encore une surface migrée-temps 15, dénommée ici "plumet" (plume en Anglais).

Comme on l'a décrit pour le domaine sommation, on peut également dans le domaine temps-migré superposer le domaine 14 au bloc temps-migré 3, cette opération de superposition étant matérialisée par une flèche 16 sur la figure.

Le résultat de la superposition est une possible coïncidence ou tangence du plumet 15 représenté en pointillé dans le bloc migré-temps 3 qui comprend des horizons sismiques migrés-temps 17, 18. L'image du point a est en a' dans le domaine 14 et celle du point spéculaire est en α' dans le bloc 3.

A cette étape, il est encore possible de procéder à une vérification visuelle et à une éventuelle correction du modèle vitesse-profondeur 4 et ce, de manière encore interactive ou en temps réel pendant la mise en oeuvre de la méthode. En effet, on peut comparer chaque plumet 15 migré-temps et un éventuel horizon sismique 18, de manière à déterminer s'il y a un écart à la tangence ou coïncidence entre lesdits plumet et horizon sismique. Lorsque cet écart existe, on procède à des itérations successives sur le modèle vitesse-profondeur 4, par changement des valeurs du vecteur pendage-azimut et/ou des valeurs de vitesse du modèle vitesse-profondeur et/ou des paramètres caractérisant l'anisotropie de la zone du puits, jusqu'à ce que ledit écart soit acceptable pour considérer que ledit modèle vitesse-profondeur 4 est correctement calé.

Ainsi, la présente invention permet sensiblement à chaque étape de la méthode de procéder à des corrections des défauts éventuels, de revenir aux causes desdits défauts et d'y remédier par des actions ponctuelles et ce, très rapidement, le résultat final étant un excellent et précis calage de la trajectoire 5 dans le bloc migré-temps et une amélioration du modèle migration après et avant sommation des données sismiques, imageries, temps-profondeur, etc. et du modèle vitesse-profondeur 4, ce modèle devenant alors apte à être utilisé à d'autres fins.

Dans l'hypothèse où la connaissance du champ de vitesse de migration temps 13 serait imparfaite, il est possible selon l'invention d'améliorer ladite connaissance. En effet, à partir d'un pointé dans le bloc migré-temps 3, par exemple des horizons 17, 18, on crée des réflecteurs correspondants qui peuvent être transformés en des réflecteurs somme par des processus de démigration strictement inverses des simulations de migration-temps. Ces réflecteurs démigrés sont alors superposés aux réflecteurs ou données sismiques du bloc 2. Tout écart est noté et peut être utilisé pour améliorer le champ de vitesse de migration temps 13.

Une autre caractéristique de la présente invention est de permettre une mise en oeuvre inverse de la méthode. En effet, pour un point de tangence entre un plumet 15 et l'horizon correspondant dans le bloc migré-temps, on peut déterminer le couple pendage-temps qui lui est associé. Puis, on repère dans le domaine somme synthétique 9 la surface de diffraction 10 correspondant audit plumet 15 et son point spéculaire α dans le bloc somme enregistré 2. Comme le point spéculaire α correspond à un seul point du modèle vitesse-profondeur 4, il devient possible de déterminer la position de ce point ainsi que le vecteur pendage-azimut associé.

Grâce à la présente invention, on obtient, pour un modèle profondeur 4 choisi et pour un point particulier A de la trajectoire 5 et pour un vecteur-pendage sélectionné, les positions correspondantes α du bloc somme enregistré 2 et α' dans le bloc migré-temps 3.

S'il y a ambiguïté ou incertitude sur le pendage, le point A se projette en une autre surface a" (non représentée) caractéristique de cette ambiguïté.

La superposition dans l'un ou l'autre domaine sommation ou migration-temps permet éventuellement de lever cette ambiguïté, mais pas obligatoirement. Dans le dernier cas le résultat du procédé n'est pas une trajectoire unique, mais une "zone-trajectoire" possible.

Un avantage de la présente invention qui découle de ce qui précède est que soit à partir d'un point ou d'une zone de la surface de diffraction 10, soit à partir d'un point ou d'une partie du plumet 15, on peut revenir de façon constante au modèle de vitesse-profondeur 4.

Il est aisé de comprendre également qu'un point de tangence ou de coïncidence sur les blocs 2 et/ou 3, permet de revenir directement au modèle vitesse-profondeur 4 sans étape intermédiaire et d'en déduire des informations très précises et très utiles aux spécialistes.

## Revendications

1. Méthode pour représenter dans un domaine spatio-temporel (X, Y, T) la trajectoire (5) d'au moins un puits (1) foré dans une zone du sous-sol, **caractérisée en ce qu'**elle consiste à
a) élaborer dans un domaine spatial (X, Y, Z) un modèle vitesse-profondeur (4) calé au puits (1), géologiquement représentatif de ladite zone et comportant une représentation de ladite trajectoire (5) dudit puits ainsi que des interfaces géologiques (6 à 8) ;
b) sélectionner au moins un point (A) à l'intersection de ladite trajectoire et d'une interface, ledit point (A) étant défini par ses coordonnées spatiales (X, Y, Z) et par un vecteur pendage de ladite interface ; et
c) au moins modéliser dans un domaine (9) somme synthétique (X, Y, T) l'image (a) du point sélectionné (A) par un lancer de rayon à déport nul dans le modèle vitesse-profondeur (4), ladite image (a) dans ce domaine étant définie par des coordonnées spatio-temporelles (X, Y, T) et par un vecteur pendage-temps.

2. Méthode selon la revendication 1, **caractérisée en ce qu'**en outre elle comprend l'étape d'effectuer une migration en temps de ladite image (a) du domaine synthétique (9), de manière à obtenir une représentation (a') de ladite image (a) dans un domaine migré-temps (14).

3. Méthode selon la revendication 1, **caractérisée en ce qu'**en outre le domaine somme synthétique (9) contenant l'image (a) est superposé à un bloc somme enregistré (2) de données sismiques.

4. Méthode selon la revendication 2, **caractérisée en ce qu'**en outre le domaine migré-temps (14) contenant la représentation (a') est superposé à un bloc de données sismiques migrées-temps (3) obtenu à partir du bloc somme enregistré (2).

5. Méthode selon la revendication 1, **caractérisée en ce que** le modèle de vitesse profondeur (4) est un modèle maillé.

6. Méthode selon l'une des revendications 3 ou 4, **caractérisée en ce que** le bloc de données sismiques migrées-temps (3) est obtenu par migration de Kirchhoff du bloc somme enregistré (2) et **en ce que** le domaine migré-temps (14) résulte d'une sommation analytique de ladite migration de KIRCHHOFF.

7. Méthode selon l'une des revendications 3 ou 4, **caractérisée en ce que** le bloc de données sismiques migrées-temps (3) est obtenu au moyen d'une migration par différences finies et **en ce que** le domaine migré-temps résulte d'une opération de lancer de rayons anisotropes pas à pas dans le domaine de vitesse (13).

8. Méthode selon l'une des revendications précédentes, **caractérisée en ce que** chaque image (a) dans le domaine somme synthétique (9) est distribuée sur une surface dite surface de diffraction (10).

9. Méthode selon la revendication 8, **caractérisée en ce qu'**on sélectionne une partie de la surface de diffraction (10) comme étant l'image dans le domaine somme synthétique (9) du point (A) sélectionné dans le modèle de vitesse-profondeur (4).

10. Méthode selon la revendication 3 et l'une des revendications 6 ou 7, **caractérisée en ce qu'**on réalise, au cours de la mise en oeuvre de ladite méthode, une comparaison entre le domaine somme synthétique (9) et le bloc sismique somme enregistré (2) et **en ce qu'**on détermine l'écart à la tangence ou à la coïncidence susceptible d'apparaître entre chaque surface de diffraction (10) et le réflecteur (12) correspondant et, lorsqu'il y a un écart, on procède à des itérations successives sur le modèle vitesse-profondeur (4) jusqu'à ce que ledit écart soit acceptable pour considérer que ledit modèle vitesse-profondeur (4) est correctement calé.

11. Méthode selon la revendication 8, **caractérisée en ce que** la représentation en temps migré de la surface de diffraction (10) est une surface migrée-temps (15).

12. Méthode selon la revendication 11, **caractérisée en ce qu'**on sélectionne une partie de la surface migrée-temps (15) comme étant l'image dans le domaine migré-temps (14) du point (A) sélectionné dans le modèle vitesse-profondeur (4).

13. Méthode selon la revendication 11, **caractérisée en ce qu'**au cours de la mise en oeuvre de ladite méthode, on détermine s'il y a un écart à la tangence ou à la coïncidence entre ladite surface migrée-temps (15) et l'horizon migré-temps correspondant (18) et, lorsqu'il y a un écart, on procède à des itérations successives sur le modèle vitesse-profondeur (4) jusqu'à ce que ledit écart soit acceptable pour considérer que ledit modèle vitesse-profondeur (4) est correctement calé.

## Patentansprüche

1. Verfahren zum Darstellen des Verlaufs (5) von mindestens einem Bohrloch (1), das in eine Zone des Untergrunds gebohrt ist, in einem räumlich-zeitlichen Bereich (X, Y, T) **dadurch gekennzeichnet, daß** es aus folgendem besteht:
a) Erstellen eines Geschwindigkeit-Tiefe-Modells (4) in einem räumlichen Bereich (X, Y, Z), das am Bohrloch (1) festgestellt wird, welches die Zone geologisch darstellt und eine Darstellung des Verlaufs (5) des Bohrlochs sowie der geologischen Grenzflächen (6 bis 8) umfaßt;
b) Auswählen von mindestens einem Punkt (A) an der Kreuzung des Verlaufs und einer Grenzfläche, wobei der Punkt (A) durch seine Raumkoordinaten (X, Y, Z) und durch einen Fallinienvektor der Grenzfläche definiert ist; und
c) zumindest modellhaftes Darstellen des Bildes (a) des ausgewählten Punkts (A) in einem synthetischen Summenbereich (9) (X, Y, T) durch eine Durchrechnung eines Strahls mit einem Versatz von Null in dem Geschwindigkeit-Tiefe-Modell (4), wobei das Bild (a) in diesem Bereich durch Raum-Zeit-Koordinaten (X, Y, T) und durch einen Zeitfallvektor definiert ist.

2. Verfahren nach Anspruch 1, **dadurch gekennzeichnet, daß** es außerdem den Schritt des Bewirkens einer Zeitmigration des Bildes (a) des synthetischen Bereichs (9) umfaßt, um eine Darstellung (a') des Bildes (a) in einem Zeitmigrationsbereich (14) zu erhalten.

3. Verfahren nach Anspruch 1, **dadurch gekennzeichnet, daß** der synthetische Summenbereich (9), der das Bild (a) enthält, außerdem auf einen aufgezeichneten Summenblock (2) von seismischen Daten überlagert wird.

4. Verfahren nach Anspruch 2, **dadurch gekennzeichnet, daß** der Zeitmigrationsbereich (14), der die Darstellung (a') enthält, außerdem auf einen Block von seismischen Zeitmigrationsdaten (3) überlagert wird, welcher aus dem aufgezeichneten Summenblock (2) erhalten wird.

5. Verfahren nach Anspruch 1, **dadurch gekennzeichnet, daß** das Geschwindigkeit-Tiefe-Modell (4) ein Gittermodell ist.

6. Verfahren nach einem der Ansprüche 3 oder 4, **dadurch gekennzeichnet, daß** der Block der seismischen Zeitmigrationsdaten (3) durch Kirchhoff-Migration des aufgezeichneten Summenblocks (2) erhalten wird und daß der Zeitmigrationsbereich (14) aus einer analytischen Summierung der KIRCHHOFF-Migration resultiert.

7. Verfahren nach einem der Ansprüche 3 oder 4, **dadurch gekennzeichnet, daß** der Block von seismischen Zeitmigrationsdaten (3) mit Hilfe einer Migration durch endliche Differenzen erhalten wird und daß der Zeitmigrationsbereich aus einer schrittweisen Durchrechnungsoperation von anisotropen Strahlen im Geschwindigkeitsbereich (13) resultiert.

8. Verfahren nach einem der vorangehenden Ansprüche, **dadurch gekennzeichnet, daß** jedes Bild (a) in dem synthetischen Summenbereich (9) auf einer Diffraktionsfläche (10) genannten Oberfläche verteilt ist.

9. Verfahren nach Anspruch 8, **dadurch gekennzeichnet, daß** man einen Teil der Diffraktionsfläche (10) als das Bild im synthetischen Summenbereich (9) des Punkts (A), der in dem Geschwindigkeit-Tiefe-Modell (4) ausgewählt wird, auswählt.

10. Verfahren nach Anspruch 3 und einem der Ansprüche 6 oder 7, **dadurch gekennzeichnet, daß** man im Verlauf der Durchführung des Verfahrens einen Vergleich zwischen dem synthetischen Summenbereich (9) und dem aufgezeichneten seismischen Summenblock (2) durchführt und daß man den Abstand an der Tangente oder an der Koinzidenz, der zwischen jeder Diffraktionsfläche (10) und dem entsprechenden Reflektor (12) auftreten kann, ermittelt, und wenn es einen Abstand gibt, man fortlaufende Iterationen an dem Geschwindigkeit-Tiefe-Modell (4) vornimmt, bis der Abstand annehmbar ist, um das Geschwindigkeit-Tiefe-Modell (4) als korrekt festgelegt zu betrachten.

11. Verfahren nach Anspruch 8, **dadurch gekennzeichnet, daß** die Darstellung in der Zeitmigration der Diffraktionsfläche (10) eine Zeitmigrationsfläche (15) ist.

12. Verfahren nach Anspruch 11, **dadurch gekennzeichnet, daß** man einen Teil der Zeitmigrationsfläche (15) als das Bild im Zeitmigrationsbereich (14) des Punkts (A), der in dem Geschwindigkeit-Tiefe-Modell (4) ausgewählt wird, auswählt.

13. Verfahren nach Anspruch 11, **dadurch gekennzeichnet, daß** man im Verlauf der Durchführung des Verfahrens feststellt, ob es an der Tangente oder an der Koinzidenz zwischen der Zeitmigrationsfläche (15) und dem entsprechenden Zeitmigrationshorizont (18) einen Abstand gibt, und wenn es einen Abstand gibt, man fortlaufende Iterationen an dem Geschwindigkeit-Tiefe-Modell (4) vornimmt, bis der Abstand annehmbar ist, um das Geschwindigkeit-Tiefe-Modell (4) als korrekt festgelegt zu betrachten.

## Claims

1. Method for representing in a space-time domain (X, Y, T) the trajectory (5) of at least one borehole (1) drilled in a sub-surface area, **characterized in that** it consists in
a) producing in a space domain (X, Y, Z) a velocity-depth model (4) tied to the borehole (1), geologically representative of said area and including a representation of said trajectory (5) of said borehole and of geological reflectors (6-8).
b) selecting at least one point (A) on or near said trajectory and a reflector, said point (A) being defined by its space coordinates and by one dip vector of said reflector, and
c) at least modelling in a synthetic stack domain (X, Y, T) the image (a) of the selected point (A), said image (a) being defined by space-time coordinates (X, Y, T) and by a dip-time vector and being obtained by zero offset ray tracing in the velocity-depth model (4).

2. Method according to claim 1, **characterized in that** it further comprises the step of time migrating said image (a) from the synthetic domain (9) to obtain a representation (a') of said image (a) in a time-migrated domain (14).

3. Method according to claim 1, **characterized in that** the synthetic stack domain (9) containing the image (a) is superposed on a seismic data stack block (2).

4. Method according to claim 2, **characterized in that** the time-migrated domain 14 containing the representation (a') is superposed on a time-migrated seismic data block (3) obtained from said recorded seismic data block (2).

5. Method according to claim 1, **characterized in that** the velocity depth model (4) is a meshed model.

6. Method according to any one of claims 3 or 4, **characterized in that** the time-migrated seismic data block (3) is obtained by KIRCHHOFF migration of the stack seismic data block (2) and **in that** the time-migrated domain (14) is the result of analytic stacking of said KIRCHHOFF migration.

7. Method according to any one of claims 3 or 4, **characterized in that** the time-migrated seismic data block (3) is obtained by means of a finite differences migration and **in that** the time-migrated domain results from an operation of step by step anisotropic ray tracing in the velocity domain (13).

8. Method according to any one of the preceding claims, **characterized in that** each image (a) in the synthetic sum domain (9) is distributed over a surface known as the diffraction surface (10).

9. Method according to claim 8, **characterized in that** a part of the diffraction surface (10) is selected as being the image in the synthetic stack domain (9) of the point (A) selected in the velocity-depth model (4).

10. Method according to claim 3 and any one of the claims 6 or 7, **characterized in that**, during application of said method, the synthetic stack domain (9) and the recorded stack block (2) are compared and any tangency or coincidence offset between each diffraction surface (10) and the corresponding reflector (12) is determined and, if there is an offset, successive iterations are applied to the velocity-depth model (4) until said offset is acceptable whereupon it is deemed that said velocity- depth model (4) is correctly tied.

11. Method according to claim 8, **characterized in that** the representation of the diffraction surface (10) in migrated time is a time-migrated surface (15).

12. Method according to claim 11, **characterized in that** a part of the time-migrated surface (15) is selected as being the image in the time-migrated domain (14) of the point (A) selected in the velocity-depth model (4).

13. Method according to claim 11, **characterized in that** during application of said method any tangency or coincidence offset between said time-migrated surface- (15) and the corresponding time-migrated horizon (18) is determined and, if there is an offset, successive iterations are applied to the velocity-depth model (4) until said offset is acceptable whereupon it is deemed that said velocity-depth model (4) is correctly tied.
